# EUROPEAN PATENT SPECIFICATION

(11) **EP 1 880 276 B1**
(45) Date of publication and mention of the grant of the patent: **06.10.2010**
(21) Application number: 06743880.4
(22) Date of filing: 05.05.2006
(51) Int. Cl.: G06F 9/38

(54) **MEMORY CACHING IN DATA PROCESSING**
SPEICHER-CACHING IN DER DATENVERARBEITUNG
ANTEMEMOIRE DANS UN TRAITEMENT DE DONNEES

(30) Priority: 09.05.2005 GB 0509420
(43) Date of publication of application: 23.01.2008
(73) Proprietor: Sony Computer Entertainment Inc., Tokyo 107-0062 (JP)
(72) Inventor: EZRA, Rabin Sony Computer Entertainment Europe Ltd, London W1F 9LD (GB)
(74) Representative: Turner, James Arthur
(86) International application number: PCT/GB2006/001660
(87) International publication number: WO 2006/120408

(56) References cited:
- EP-A2- 0 271 187
- US-A1- 4 701 844
- US-A1- 2002 010 837

## Description

This invention relates to memory caching in data processing.

An example problem will now be described with respect to emulation of a particular microprocessor, but it will be appreciated that the invention has much wider applicability.

Microprocessor cores are used in various applications such as television set top boxes and the Sony^{RTM} Playstation 2^{™} (PS2) family computer entertainment system. In the PS2's input/output processor (IOP), the core is provided with 2 Megabytes of main memory and a very small cache. It makes use of so-called cache "write through", where any information written back by the processor to a cached memory location is also written to the underlying main memory. This means that the new information is written to the cache in case it is needed to be read again soon, but the write operation itself is not cached because a main memory access is still needed each time. One advantage of this arrangement is that it allows self-modifying program code to be implemented more easily. Background art is US 2002/0010837 which discloses a cache memory system and method of controlling cache memory.

It has been proposed that the IOP be emulated by an emulation processor having an internal memory too small to provide the 2 MB of the IOP's memory. An external memory can be accessed, but this is only via a DMA controller. To allow the emulation to operate at a useful rate, a caching strategy is therefore required, because accesses to an external memory in the emulating system using the DMA controller are slow. To cut down on the number of external memory accesses which are needed, the caching strategy should include the caching of data writes as well as data reads. However, this would mean that self-modifying code cannot easily be emulated.

This invention provides a data processor in accordance with claim 1 appended hereto.

The invention provides an efficient way of accessing data and instructions while reducing the need to access a main memory.

Viewed from a second aspect this invention provides a data processing method in accordance with claim 10 appended hereto.

Further aspects of the invention include computer software comprising program code to carry out this method; and a medium (e.g. a transmission medium or a storage medium) by which such program code is provided.

Various other aspects and features of the invention are defined in the appended claims.

Embodiments of the invention will now be described, by way of example only, with reference to the accompanying drawings in which:
Figure 1 schematically illustrates a data processing system;
Figure 2 schematically illustrates a data processing system using data and instruction caches;
Figure 3 is a schematic flow chart relating to an operation to read an instruction;
Figure 4 is a schematic flow chart relating to an operation to write a data value; and
Figure 5 is a schematic flow chart relating to an operation to read a data value.

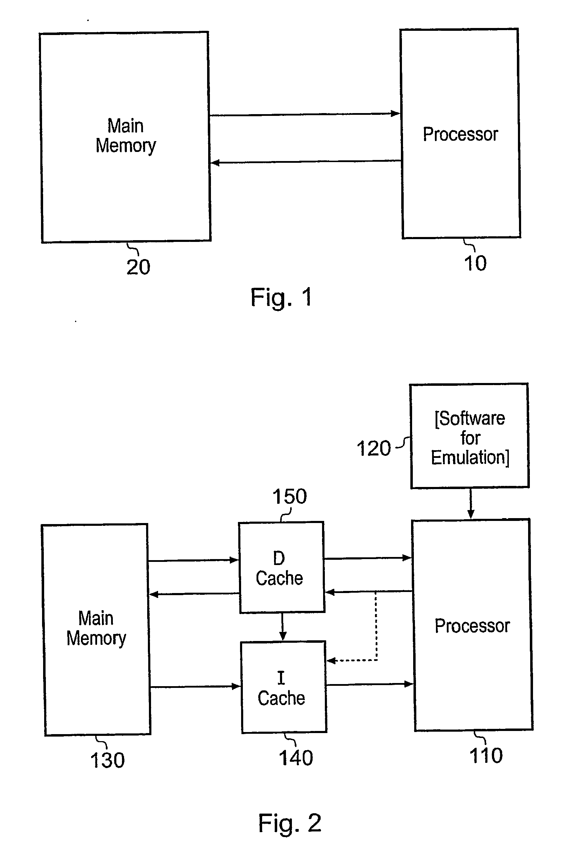

Figure 1 schematically illustrates a data processing system to be emulated.
The system comprises a processor 10 which reads data and instructions from, and writes data and modified instructions to, a main memory 20.

The following description relates to a technique for emulating the operation of the system of Figure 1 using a processor whose local memory is too small to hold an image of the main memory 20 of the system to be emulated. Because of this restriction, a cache strategy has to be employed.

Figure 2 schematically illustrates the emulation arrangement. Emulation techniques are generally well known, and features which are not directly relevant to the present embodiment are omitted for clarity. Emulation involves an emulation processor running emulation software written in a language native to the emulation processor, so that a group of such native instructions are run in order to emulate the handling of an instruction in the emulated system. In the description which follows, the term "instruction" will refer to an instruction in the emulated system, and not to a native instruction of the emulation software.

Referring to Figure 2, a processor 110 running emulation software 120 accesses a main memory 130 via an instruction cache (I) 140 and a data cache (D) 150. The reason that the I cache and the D cache are used is that the memory local to the processor 110 is too small to hold an image of the main memory 20 of the emulated system, and the main memory 130 associated with the processor 110 has to be accessed via an expensive (i.e. time consuming) DMA accesses.

The I cache 140 is direct mapped for speed of access and holds 8 memory pages of 4 kilobytes each (i.e. each page holds plural cache lines). A small number of large memory pages are used in this embodiment to make the process of checking for a cache hit more efficient. Large memory pages amortize slow memory accesses. Memory pages may be read from the main memory 130 into the I cache 140, and the processor may read instructions from the I cache 140. However, values stored in the I cache 140 are never written back to the main memory 130.

Transfers to and from caches are made on a page by page basis. Similarly, the searching of a cache, to detect whether a required data item is held, is carried out by detecting whether the page containing that item is held in the cache.

The D cache 150 is fully associative to reduce so-called "thrashing" - i.e. a rapid changing of the cached pages - and again holds 8 pages of 4 kilobytes each. When a new page is to be read into the D cache from the main memory 130, a least-recently-accessed page stored in the D cache is written back to the main memory (if it has been changed since it was read from the main memory). So, if the processor modifies any stored data in the D cache, the modification is held in the D cache 150 until that page is written back to the main memory 130.

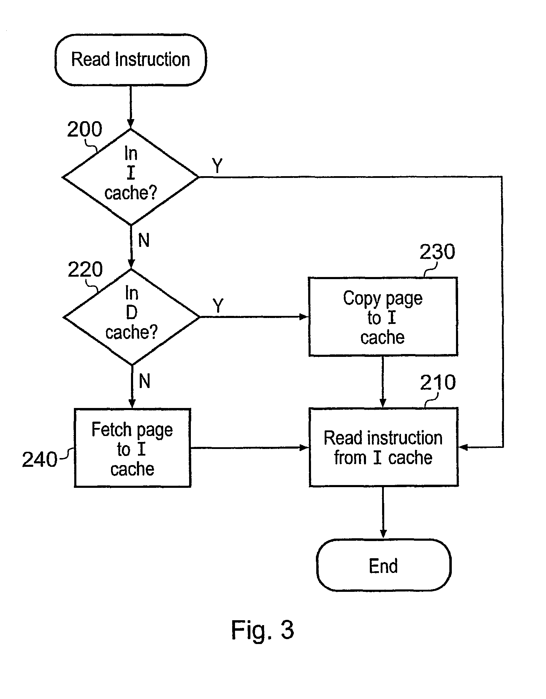

The interaction of the D cache and the I cache will now be described with reference to flowcharts shown in figures 3 to 5.

Figure 3 is a schematic flowchart relating to an operation to read an instruction.

At a step 200, the processor 110 attempts to access the required instruction from the I cache 140. If the required instruction is present in the I cache 140, control passes to a step 210 where the instruction is read from the I cache and passed to the processor 110 for handling in the usual way. The process then ends.

However, if the required instruction was not in the I cache 140, a check is then made as to whether the required instruction is part of the information stored in the D cache 150. This test is represented by a step 220. If the required instruction is indeed in the D cache, then the whole page is copied from the D cache to the I cache at a step 230. Note that this can simply overwrite a page in the I cache, because data from the I cache is never written back to the main memory 130. From the step 230 control again passes to the step 210 at which the required instruction is read from the I cache and the processor ends.

If, however, the required instruction is neither in the I cache (step 200) nor the D cache (step 220) then at a step 240 the page containing the required instruction is read from the main memory to the I cache 140, overwriting a page in the I cache. Control again passes to the step 210 and the process ends.

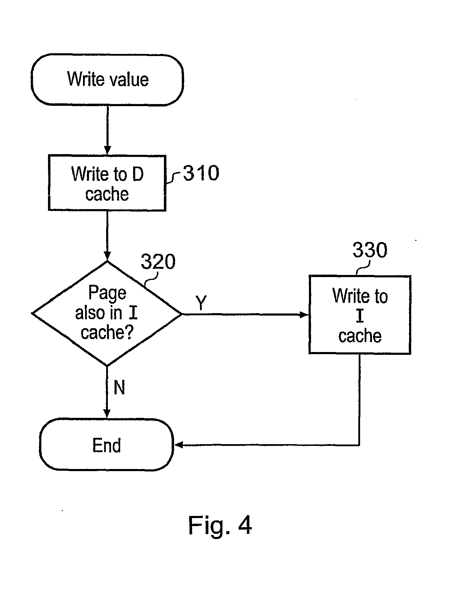

Figure 4 is a schematic flowchart relating to an operation to write a data value.

At a step 310, the processor 110 writes a data value to the D cache 150. As described above, this will eventually be used to update the main memory 130, though this may not happen until the relevant page has to be overwritten in the D cache.

At a step 320, a detection is made as to whether the page containing the newly written data value is also held in the I cache. If it is then at a step 330 the new data value is also written to the relevant position in the I cache and the process ends. If, however, the relevant page was not held in the I cache, the process would simply end there.

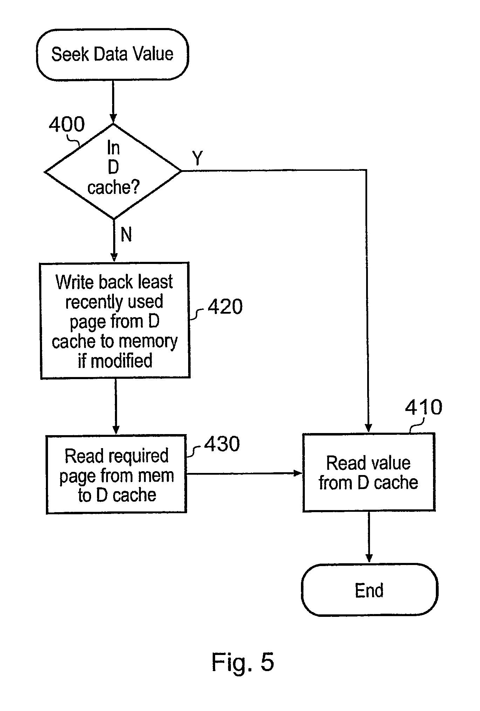

Figure 5 is a schematic flowchart relating to an operation to read a data value. At a step 400, the processor 110 attempts to access the data value from the D cache 150. If the required address is cached in the D cache 150, then the required value is read from the D cache at a step 410 and the process ends. If, however, the necessary page is not in the D cache, then at a step 420 the least-recently used page is written back (if required, i.e. if it has been modified) from the D cache to the main memory 130, and at a step 430 the page containing the required memory address is read from the main memory 130 to the D cache 150. Control then passes again to the step 410 and the process ends.

Using the strategy above, even though information stored in the I cache 140 is never directly written back to the main memory 130 and no I cache invalidate instruction or function is provided in the present embodiment, if the processor 110 runs so-called self-modifying code so that instructions stored in the main memory 130 are to be overwritten by instructions generated by means of running the instructions themselves, there is no chance of an inconsistency in the code to be run. Where an instruction is to be overwritten, the new value is written to the D cache and, if that page is also stored in the I cache, it is written to the I cache. So, the I cache is kept up to date with any changes. At the time of an instruction is to be accessed, if it is not in the I cache, the D cache is searched before the main memory. So, any changes not yet written back to main memory 130 will still be in the D cache and the modified instructions will be transferred from the D cache to the I cache.

## Claims

1. A data processor comprising:
a main memory (130);
an instruction cache (140) and a data cache (150) each arranged as a plurality of cache pages;
instruction fetch logic (110) operable to search the instruction cache (140) for a required instruction; and if the required instruction is not present in the instruction cache (140), to search the data cache (150) if the required instruction is present in the data cache to fetch the page comprising the required instruction from the data cache to the instruction cache; and if the required instruction is not present in the data cache (150), to fetch the page comprising the required instruction from the main memory (130) to the instruction cache (140);
data write logic (110) operable to write a data value into the relevant page of the data cache (150) at a data address and, if the same page is also represented in the instruction cache (140), to write that data value at the corresponding address of that page in the instruction cache (140); and
cache control logic (110) operable to transfer pages from the data cache (150) to the main memory (130),
in which data values stored in the instruction cache (140) are never written back to the main memory.

2. A data processor according to claim 1, in which the instruction cache is direct mapped and the data cache is fully associative.

3. A data processor according to claim 1 or 2, in which transfers to or from a cache are carried out on a page-by-page basis.

4. A data processor according to claim 3, in which the instruction fetch logic is operable to search the instruction cache and the data cache by detecting whether a required page is held in the respective cache.

5. A data processor according to claim 3 or 4, in which the cache control logic is arranged to transfer a least-recently-accessed page of data from the data cache to the main memory when a newly required page is to be written into the data cache and that least-recently accessed page contains data which has been modified.

6. A data processor according to any one of the preceding claims, in which each of the caches holds 32 kilobytes arranged as 8 pages of 4 kilobytes each.

7. A data processor according to any one of the preceding claims, comprising instruction execution logic for executing instructions.

8. A data processor according to claim 8, in which the instruction execution logic comprises a data processing arrangement running software to emulate the execution of the instructions.

9. A data processor according to any one of the preceding claims, the data processor not providing a function of invalidating entries in the instruction cache.

10. A data processing method in a system having a main memory (130), and an instruction cache (140) and a data cache (150) each arranged as a plurality of cache pages;
the method comprising the steps of:
searching (200) the instruction cache for a required instruction;
if the required instruction is not present in the instruction cache (140), searching (220) the data cache (150); if the required instruction is present in the data cache, fetching the page comprising the required instruction from the data cache to the instruction cache;
if the required instruction is not present in the data cache, fetching (240) the page comprising the required instruction from the main memory (130) to the instruction cache (140);
when a data value is to be written, writing (310) that data value into the relevant page of the data cache (150) at a data address and, if the same page is also represented in the instruction cache (140), writing (330) that data value at the corresponding address of that page in the instruction cache (140); and
transferring pages from the data cache (150) to the main memory (130),
in which data values stored in the instruction cache (140) are never written back to the main memory.

11. Computer software comprising program code to carry out a method according to claim 11.

12. A medium by which program code according to claim 12 is provided.

13. A medium according to claim 13, the medium being a transmission medium.

14. A medium according to claim 13, the medium being a storage medium.

## Patentansprüche

1. Datenprozessor, der umfasst:
einen Hauptspeicher (130);
einen Instruktions-Pufferspeicher (140) und einen Daten-Pufferspeicher (150), die jeweils als mehrere Pufferspeicher-Seiten angeordnet sind;
eine Instruktionshollogik (110), welche betriebsfähig ist, den Instruktions-Pufferspeicher (140) auf eine erforderliche Instruktion zu durchsuchen; und wenn die erforderliche Instruktion nicht im Instruktions-Pufferspeicher (140) vorhanden ist, den Daten-Pufferspeicher (150) zu durchsuchen, wenn die erforderliche Instruktion im Daten-Pufferspeicher vorhanden ist, um die Seite, welche die erforderliche Instruktion aufweist, vom Daten-Pufferspeicher zum Instruktions-Pufferspeicher zu holen; und wenn die geforderte Instruktion im Daten-Pufferspeicher (150) nicht vorhanden ist, die Seite, welche die geforderte Instruktion aufweist, vom Hauptspeicher (130) zum Instruktions-Pufferspeicher (140) zu holen;
eine Datenschreiblogik (110), die betriebsfähig ist, einen Datenwert in die relevante Seite des Daten-Pufferspeichers (150) bei einer Datenadresse zu schreiben, und, wenn die gleiche Seite ebenfalls im Daten-Pufferspeicher (140) gezeigt wird, diesen Datenwert bei der entsprechenden Adresse dieser Seite in den Daten-Pufferspeicher (140) zu schreiben; und
eine Pufferspeicher-Steuerlogik (110), die betriebsfähig ist, Seiten vom Daten-Pufferspeicher (140) zum Hauptspeicher (130) zu übertragen,
wobei Datenwerte, welche im Instruktions-Pufferspeicher (140) gespeichert sind, niemals in den Hauptspeicher zurückgeschrieben werden.

2. Datenprozessor nach Anspruch 1, wobei der Instruktions-Pufferspeicher unmittelbar abgebildet ist, und der Daten-Pufferspeicher völlig assoziativ ist.

3. Datenprozessor nach Anspruch 1 oder 2, wobei Übertragungen zu und von einem Pufferspeicher auf Basis von Seite zu Seite durchgeführt werden.

4. Datenprozessor nach Anspruch 3, wobei die Informationshollogik betriebsfähig ist, den Instruktions-Pufferspeicher und den Daten-Pufferspeicher zu durchsuchen, indem erfasst wird, ob eine geforderte Seite in dem entsprechenden Pufferspeicher gehalten wird.

5. Datenprozessor nach Anspruch 3 oder 4, wobei die Pufferspeicher-Steuerlogik eingerichtet ist, eine auf am wenigsten vor kurzem zugegriffene Seite von Daten vom Daten-Pufferspeicher zum Hauptspeicher zu übertragen, wenn eine neu geforderte Seite in den Daten-Pufferspeicher zu schreiben ist, und diese am wenigsten vor kurzem zugegriffene Seite Daten enthält, welche modifiziert wurden.

6. Datenprozessor nach einem der vorhergehenden Ansprüche, wobei jeder der Pufferspeicher 32 Kilobytes hält, welche als 8 Seiten von jeweils 4 Kilobytes angeordnet sind.

7. Datenprozessor nach einem der vorhergehenden Ansprüche, der eine Instruktionsausführungslogik zum Ausführen von Instruktionen umfasst.

8. Datenprozessor nach Anspruch 8, wobei die Instruktionsausführungslogik eine Datenverarbeitungsanordnungs-Ablaufsoftware umfasst, um die Ausführung der Instruktionen zu emulieren.

9. Datenprozessor nach einem der vorhergehenden Ansprüche, wobei der Datenprozessor eine Funktion zum Ungültigmachen von Einträgen im Instruktions-Pufferspeicher nicht bereitstellt.

10. Datenverarbeitungsverfahren in einem System, welches einen Hauptspeicher (130) hat, und einen Instruktions-Pufferspeicher (140) und einen Daten-Pufferspeicher (150), die jeweils als mehrere Pufferspeicherseiten angeordnet sind;
wobei das Verfahren folgende Schritte umfasst:
Durchsuchen (200) des Instruktions-Pufferspeichers auf eine geforderte Instruktion;
wenn die geforderte Instruktion im Instruktions-Pufferspeicher (140) nicht vorhanden ist, Durchsuchen (220) des Daten-Pufferspeichers (150);
wenn die geforderte Instruktion im Daten-Pufferspeicher vorhanden ist, Holen der Seite, welche die geforderte Instruktion aufweist, vom Daten-Pufferspeicher in den Instruktions-Pufferspeicher;
wenn die geforderte Instruktion im Daten-Pufferspeicher nicht vorhanden ist, Holen (240) der Seite, welche die geforderte Instruktion umfasst, vom Hauptspeicher (130) in den Instruktions-Pufferspeicher (140);
wenn ein Datenwert zu schreiben ist, Schreiben (310) dieses Datenwerts in die relevante Seite des Daten-Pufferspeichers (150) bei einer Datenadresse, und, wenn die gleiche Seite ebenfalls im Instruktions-Pufferspeicher (140) gezeigt wird, Schreiben (330) dieses Datenwerts als die entsprechende Adresse dieser Seite in den Instruktions-Pufferspeicher (140); und
Übertragen von Seiten vom Daten-Pufferspeicher (150) zum Hauptspeicher (130),
wobei Datenwerte, welche im Instruktions-Pufferspeicher (140) gespeichert sind, niemals in den Hauptspeicher zurückgeschrieben werden.

11. Computer-Software, welches einen Programmcode aufweist, um ein Verfahren nach Anspruch 10 durchzuführen.

12. Medium, über welches der Programmcode nach Anspruch 11 bereitgestellt wird.

13. Medium nach Anspruch 12, wobei das Medium ein Übertragungsmedium ist.

14. Medium nach Anspruch 12, wobei das Medium ein Speichermedium ist.

## Revendications

1. Processeur de données comportant :
une mémoire principale (130) ;
un cache d'instruction (140) et un cache de données (150), chacun disposé sous la forme d'une pluralité de pages cache ;
une logique d'extraction d'instruction (110) pouvant rechercher le cache d'instruction (140) pour une instruction demandée : et si l'instruction demandée n'est pas présente dans le cache d'instruction (140), rechercher le cache de données (150) ; si l'instruction demandée est présente dans le cache de données, rechercher la page comportant l'instruction demandée depuis le cache de données vers le cache d'instruction ; et si l'instruction demandée n'est pas présente dans le cache de données (150), extraire la page comportant l'instruction demandée depuis la mémoire principale (130) vers le cache d'instruction (140) ;
une logique d'écriture de données (110) pouvant écrire une valeur de données dans la page pertinente du cache de données (150) à une adresse de données et, si la même page est également représentée dans le cache d'instruction (140), écrire cette valeur de données à l'adresse correspondante de cette page dans le cache d'instruction (140) ; et
une logique de contrôle de cache (110) pouvant transférer les pages cache de données (150) à la mémoire principale (130),
dans lequel les valeurs de données mémorisées dans le cache d'instruction (140) ne sont jamais réécrites dans la mémoire principale.

2. Processeur de données selon la revendication 1, dans lequel le cache instruction est directement mappé et le cache de données est complètement associatif.

3. Processeur de données selon la revendication 1 ou 2, dans lequel des transferts vers ou depuis un cache sont effectués sur une base page par page.

4. Processeur de données selon la revendication 3, dans lequel la logique d'extraction d'instruction peut rechercher le cache d'instruction et le cache de données en détectant si une page demandée est conservée ou non dans le cache respectif.

5. Processeur de données selon la revendication 3 ou 4, dans lequel la logique de contrôle de cache est disposée pour transférer une page de données accédée le moins récemment depuis le cache de données à la mémoire principale lorsqu'une page nouvellement demandée doit être écrite dans le cache de données et la page accédée le moins récemment contient des données qui ont été modifiées.

6. Processeur de données selon l'une quelconque des revendications précédentes, dans lequel chacun des caches conserve 32 kilo-octets disposés sous la forme de 8 pages de 4 kilo-octets chacune.

7. Processeur de données selon l'une quelconque des revendications précédentes, comportant une logique d'exécution d'instruction pour exécuter les instructions.

8. Processeur de données selon la revendication 7, dans lequel la logique d'exécution d'instruction comporte un logiciel exécutant un agencement de traitement de données pour émuler l'exécution des instructions.

9. Processeur de données selon l'une quelconque des revendications précédentes, le processeur de données ne délivrant pas de fonction d'invalidation des entrées dans le cache d'instruction.

10. Procédé de traitement de données dans un système possédant une mémoire principale (130), et un cache d'instruction (140) et un cache de données (150), chacun agencé sous la forme d'une pluralité de pages cache ;
le procédé comportant les étapes consistant à :
rechercher (200) le cache d'instruction pour une instruction demandée ;
si l'instruction demandée n'est pas présente dans le cache d'instruction (140), rechercher (220) le cache de données (150) ; si l'instruction demandée est présente dans le cache de données, extraire la page comportant l'instruction demandée du cache de données vers le cache d'instruction ;
si l'instruction demandée n'est pas présente dans le cache de données, extraire (240) la page comportant l'instruction demandée de la mémoire principale (130) vers le cache d'instruction (140) ;
lorsqu'une valeur de données doit être écrite, écrire (310) cette valeur de données dans la page pertinente du cache de données (150) à une adresse de données et, si la même page est également représentée dans le cache d'instruction (140), écrire (330) cette valeur de données dans l'adresse correspondante de cette page dans le cache d'instruction (140) ; et
transférer les pages du cache de données (150) vers la mémoire principale (130),
dans lequel les valeurs de données mémorisées dans le cache d'instruction (140) ne sont jamais réécrites dans la mémoire principale.

11. Logiciel informatique comportant un code de programme pour effectuer un procédé selon la revendication 10.

12. Support dans lequel un code de programme conformément à la revendication 11 est prévu.

13. Support selon la revendication 12, le support étant un support de transmission.

14. Support selon la revendication 12, le support étant un support de stockage.
